# EUROPÄISCHE PATENTSCHRIFT

(11) **EP 1 080 511 B1**
(45) Veröffentlichungstag und Bekanntmachung des Hinweises auf die Patenterteilung: **16.11.2005**
(21) Anmeldenummer: 99924845.3
(22) Anmeldetag: 29.04.1999
(51) Int. Cl.: H01M 8/24

(54) **BRENNSTOFFZELLEN-MODUL**
FUEL CELL MODULE
MODULE DE PILES A COMBUSTIBLE

(30) Priorität: 30.04.1998 DE 19819291
(43) Veröffentlichungstag der Anmeldung: 07.03.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); BERGMANN, Andrée, D-53797 Lohmar (DE); KONIECZNY, Jörg-Roman, D-53721 Siegburg (DE)
(74) Vertreter: Kahlhöfer, Hermann
(86) Internationale Anmeldenummer: PCT/EP1999/002922
(87) Internationale Veröffentlichungsnummer: WO 1999/057780

(56) Entgegenhaltungen:
- DE-A- 19 539 959
- DE-A- 19 624 887
- DE-C- 19 502 391
- PATENT ABSTRACTS OF JAPAN vol. 016, no. 535 (E-1288), 5. November 1992 (1992-11-05) & JP 04 206162 A (MITSUBISHI HEAVY IND LTD), 28. Juli 1992 (1992-07-28)

## Beschreibung

Der Gegenstand der Patentanmeldung bezieht sich auf ein Brennstoffzellen-Modul mit wenigstens zwei Brennstoffzellen, insbesondere Niedertemperatur Brennstoffzellen.

Es ist bekannt, daß elektrische Energie mittels sogenannter Brennstoffzellen erzeugbar ist. Die Brennstoffzellen beziehungsweise eine Vielzahl von Brennstoffzellen, die ein Brennstoffzellen-Modul bilden, können zur mobilen und stationären sowie für eine dezentrale Stromversorgung verwendet werden. Es ist bereits bekannt, daß Brennstoffzellen in Kraftfahrzeugen eingesetzt werden, wie dies beispielsweise in der DE 43 22 765 C1 beschrieben ist.

Aus der DE 195 39 959 A1 ist ein Brennstoffzellenmodul aus mehreren Brennstoffzellen bekannt, bei dem die Sauerstoffelektroden unterschiedlicher Brennstoffzellen jeweils auf einer gemeinsamen Oberfläche eines Polymerfilms ausgebildet sind.

Im Bereich der Kraftfahrzeugtechnik finden sogenannte Niedertemperatur-Brennstoffzellen Verwendung, die bei einer Temperatur von ca. 80 °C arbeiten. Eine Brennstoffzelle weist zwei Elektroden verschiedener Polarität auf. Zwischen den Elektroden ist ein Elektrolyt angeordnet. Bei einem Elektrolyt einer Niedertemperatur-Brennstoffzelle kann es sich beispielsweise um eine protonenleitende Elektrolytmembran (PEM) handeln. Der Brennstoffzelle wird ein Brennstoff, insbesondere Wasserstoff oder Methanol, und ein Oxidant, insbesondere Sauerstoff, voneinander getrennt zugeführt. Bei einer PEM-Brennstoffzelle wandern die positiven Wasserstoff-Ionen, d. h. die Protonen, durch die Elektrolytmembran. Auf der gegenüberliegenden Seite der Elektrolytmembran reagieren die Wasserstoff-Ionen mit dem Sauerstoff. Der Elektronemüberschuß auf der Wasserstoffseite der Membran und der Elektronenmangel auf der Sauerstoffseite erzeugen einen Potentialunterschied. Wird ein äußerer Stromkreis gebildet, so kann ein Strom fließen.

Es ist bekannt, daß ein Brennstoffzellen-Modul wenigstens zwei Brennstoffzellen umfaßt, die durch eine sogenannte Bipolarplatte voneinander getrennt sind. Die Brennstoffzellen sind dabei so angeordnet, daß die Anode einer Brennstoffzelle über die bipolare Platte mit einer Kathode einer benachbarten Brennstoffzelle verbunden ist. Die einzelnen Brennstoffzellen eines Brennstoffzellen-Moduls sind elektrisch in Serie geschaltet. Die bipolare Platte dient neben der elektrischen Verbindung zwischen der Kathode und der Anode benachbarter Brennstoffzellen auch zur Trennung von Brennstoff und Oxidant. Die bipolare Platte kann durch zwei übereinander angeordnete gewellte Bleche, zwischen denen ein Glattblech angeordnet ist, gebildet sein. Die gewellten Bleche begrenzen mit dem Glattblech Kanäle, durch die der Brennstoff beziehungsweise der Oxidant geleitet wird. Vorzugsweise strömt der Brennstoff und der Oxidant im Kreuzstrom.

Es sind auch bipolare Platten bekannt, die einstückig ausgebildet sind und Kanäle für Brennstoff und Oxidant aufweisen.

Die Brennstoffzellen eines solchen Stapels werden miteinander verspannt, so daß auch bei der Betriebstemperatur des Brennstoffzellen-Moduls eine Gasdichtigkeit gewährleistet werden soll. Hierzu sind die Brennstoffzellen zwischen zwei Platten angeordnet, die über Zugstangen miteinander verbunden sind.

Die elektrischen Verluste des Brennstoffzellen-Moduls werden auch von der elektrischen Verbindung zwischen den Elekroden und der bipolaren Platte mitbestimmt.

Hiervon ausgehend liegt der vorliegenden Erfindung die Aufgabe zugrunde, die elektrischen Verluste bei einem Brennstoffzellen-Modul zu verringern.

Diese Aufgabe wird erfindungsgemäß durch ein erfindungsgemäßes Brennstoffzellen-Modul gelöst, das die Merkmale des Anspruchs 1 aufweist. Vorteilhafte Weiterbildungen und Ausgestaltungen des Brennstoffzellen-Moduls sind Gegenstand der abhängigen Ansprüche.

Das erfindungsgemäße Brennstoffzellen-Modul weist wenigstens zwei Brennstoffzellen, insbesondere Niedertemperatur-Brennstoffzellen, vorzugsweise Brennstoffzellen mit einer protonenleitenden Elektrolytmembran, auf. Jede Brennstoffzelle weist zwei Elektroden verschiedener Polarität sowie einen zwischen den Elektroden angeordneten Elektrolyten auf. Zur Versorgung der Brennstoffzellen mit einem Brennstoff ist wenigstens ein Brennstoffversorgungskanal vorgesehen. Zur Bereitstellung eines Oxidanten ist eine jede Brennstoffzelle mit wenigstens einem Oxidantversorgungskanat verbunden.

Die Elektroden verschiedener Polarität des erfindungsgemäßen Brennstoffzellen-Moduls sind elektrisch miteinander verbunden. Die wenigstens zwei Brennstoffzellen sind im wesentlichen nebeneinander wobei die Brennstoffzellen so abwechselnd angeordnet sind, daß die Elektroden verschiedener Polarität benachbarter Brennstoffzellen im wesentlichen in einer gemeinsamen Ebene liegen angeordnet. Die Anordnung der Brennstoffzellen ist derart, daß die Elektrolyte einer jeden Zelle im wesentlichen in einer gemeinsamen Ebene liegen Durch diese erfindungsgemäße Ausgestaltung des Brennstoffzellen-Moduls kann auf bipolare Platten, wie sie bei einem Brennstoffzellen-Modul nach dem Stand der Technik bekannt sind, verzichtet werden. Die elektrische Verbindung der einzelnen Brennstoffzellen erfolgt über ein Verbindungselement Die elektrischen Verluste des Brennstoffzellen-Moduls sind gegenüber einem Brennstoffzellen-Modul, wie er durch den Stand der Technik bekannt ist, geringer, da die elektrische Kontaktierung der Elektroden mit den Verbindungselementen unabhängig vom Anpreßdruck ist. Die elektrische Kontaktierung der Verbindungselemente mit den jeweiligen Elektroden kann beispielsweise durch Lötung erfolgen.

Durch die erfindungsgemäße Ausgestaltung des Brennstoffzellen-Moduls wird eine Verringerung der Länge der Verbindungselemente, die die Elektroden verschiedener Polaritäten verbinden, erreicht, so daß die ohmschen Verluste der Verbindungselemente bei gleicher Querschnittsgröße des Verbindungselementes verringert werden.

Nach einer noch weiteren vorteilhaften Ausgestaltung des Brennstoffzellen-Moduls wird vorgeschlagen, daß die wenigstens zwei Brennstoffzellen im wesentlichen nebeneinander, vorzugsweise unmittelbar nebeneinander, angeordnet sind und einen Strang bilden.

Ein Brennstoffzellen-Modul weist vorzugsweise zwei Stränge auf. Die Stränge des Brennstoffzellen-Moduls sind vorzugsweise parallel geschaltet. Jeder Strang sollte hierbei gleicher Spannung sein. Durch diese Ausgestaltung des Brennstoffzellen-Moduls wird erreicht, daß die Leistung des Brennstoffzellen-Moduls bei vorgegebener Spannung variiert werden kann.

Nach noch einer weiteren vorteilhaften Ausgestaltung des Brennstoffzellen-Moduls wird vorgeschlagen, daß wenigstens zwei Stränge voneinander elektrisch isoliert übereinander angeordnet sind. Durch diese vorteilhafte Ausgestaltung wird ein relativ kompakter Aufbau des Brennstoffzellen-Moduls erreicht. Eine solche Anordnung des Brennstoffzellen-Moduls ist insbesondere für Kraftfahrzeuge geeignet, da der Raumbedarf für das Brennstoffzellen-Modul relativ-gering ist.

Für einen weiteren kompakten Aufbau des Brennstoffzellen-Moduls wird vorgeschlagen, daß die Brennstoffzellen im wesentlichen parallel zueinander angeordnet sind.

In Abhängigkeit vom zur Verfügung stehenden Einbauraum kann das Brennstoffzellen-Modul auch so ausgebildet sein, daß die Brennstoffzellen im wesentlichen auf einem Kreisumfang angeordnet sind. Andere Konstellationen der Anordnung der Brennstoffzellen sind möglich. Es ist nicht zwingend, daß alle Brennstoffzellen parallel beziehungsweise auf einem Kreisumfang angeordnet sind. Die Anordnung der Brennstoffzellen eines jeden Strangs kann gleich sein, so daß die Ausbildung eines Brennstoffzellen-Moduls mit unterschiedlicher Leistung einfach und kostengünstig hergestellt werden kann. Es ist nicht zwingend, daß die Brennstoffzellen in den einzelnen Strängen gleich angeordnet sind. Die einzelnen Stränge können auch eine unterschiedliche Anzahl von Brennstoffzellen aufweisen.

Nach einer weiteren vorteilhaften Ausgestaltung des erfindungsgemäßen Brennstoffzellen-Moduls wird vorgeschlagen, daß eine jede Brennstoffzelle einen Brennstoffzuführkanal und einen Oxidantzuführkanal aufweist. Die Brennstoffzuführkanäle der Brennstoffzellen sind mit dem Brennstoffversorgungskanal und die Oxidantzuführkanäle der Brennstoffzellen mit dem Oxidantversorgungskanal verbunden. Die Brennstoffzellen sind zwischen dem Brennstoffversorgungskanal und dem Oxidantversorgungskanal angeordnet. Die Brennstoffzellen können auch unmittelbar, d. h. ohne Zuführkanäle, zwischen dem Brennstoffversorgungskanal und dem Oxidantversorgungskanal angeordnet sein, so daß der Brennstoff beziehungsweise der Oxidant unmittelbar an den Elektroden anliegt. Durch diese Anordnung kann die Versorgung der Brennstoffzellen mit einem Brennstoff, insbesondere mit Wasserstoff, über einen Brennstoffversorgungskanal erfolgen. Die Verteilung des Brennstoffes, insbesondere des Wasserstoffes, kann diffusionsgesteuert ablaufen. Der Wasserstoff wird vorzugsweise mit einem geringen Druck im Brennstoffversorgungskanal geleitet. Der Transport des Wasserstoffes zur Elektrode erfolgt durch Diffusion. Der Wasserstoff wird nicht im Durchfluß durch den Brennstoffversorgungskanal geleitet. Die Leistungsregelung des Brennstoffzellen-Moduls erfolgt über den Leistungsbedarf eines Verbrauchers. Die Ausbildung des Brennstotfversorgungskanals kann auch bei anderweitigen Ausgestaltungen beziehungsweise andersartigen Ausgestaltungen des Brennstoffzellen-Moduls verwendet werden.

Auch die Zufuhrung eines Oxidanten, insbesondere von Luft, kann über einen einzigen Oxidantversorgungskanal erfolgen. Statt eines Oxidantversorgungskanals können die Elektroden der Sauerstoffseite von außen her frei für die Luft zugänglich sein. Diese Ausgestaltung ist unabhängig von der Ausbildung des Brennstoffzellen-Moduls. Der Sauerstoff der Luft kann dann zu den Elektroden der Sauerstoffseite (den Kathoden) bei einer protonenleitenden Elektrolytmembran, durch eine Membran zugeführt werden. Alternativ kann ein Versorgungskanal zur Versorgung der Luftseite vorgesehen werden, falls die Sauerstoffversorgung durch Diffusion nicht ausreichend ist.

Das Brennstoffzellen-Modul kann auch mehrere Stränge aufweisen, so daß auch die Brennstoffzellen eines jeden Strangs mit dem Oxidantversorgungskanal beziehungsweise mit dem Brennstoffversorgungskanal verbunden ist. Hierdurch wird eine zentrale Versorgung des Brennstoffzellen-Moduls erreicht.

Die Leistung der Brennstoffzellen beziehungsweise die Leistung eines Strangs ist unter anderem von dem zur Verfügung gestellten Brennstoff abhängig. Zur Steuerung der Leistung des Brennstoffzellen-Moduls wird vorgeschlagen, daß jeder Strang jeweils einen Brennstoffversorgungskanal und einen Oxidantversorgungskanal aufweist. Durch getrennte Zuführung eines Brennstoffes und eines Oxidanten kann jeder Strang einzeln angesteuert werden.

Vorzugsweise ist nach einer weiteren vorteilhaften Ausgestaltung das Brennstoffzellen-Modul so ausgebildet, daß die Brennstoffzuführkanäle im wesentlichen senkrecht zum Brennstoffversorgungskanal ausgebildet sind.

Das Brennstoffzellen-Modul kann auch im wesentlichen ohne Brennstoffzuführkanäle und Oxidantzuführkanäle ausgebildet sein. Bei einer solchen Ausgestaltung stehen die Elektroden, bei denen es sich um poröse Elektroden handelt, in unmittelbarem strömungstechnischen Verbund mit dem Brennstoffversorgungskanal und dem Oxidantversorgungskanal. Der Transport des Brennstoffes beziehungsweise des Oxidationsmittels erfolgt durch Diffusion in den porösen Elektroden.

Der Oxidantversorgungskanal kann als ein Durchgangskanal ausgebildet sein, in dem das Oxidationsmittel, insbesondere Luft, strömt. Wird das Brennstoffzellen-Modul als Versorgungseinheit einer Antriebsvorrichtung eines Fahrzeugs verwendet, so kann es zweckmäßig sein, wenn die Luft über geeignete Strömungsmittel unmittelbar aus der Umgebungsatmosphäre in den Oxidantversorgungskanal gelangt. Dies hat den Vorteil, daß während einer Fahrt des Fahrzeugs Luft in den Versorgungskanal gelangt, ohne daß hierzu zusätzliche Einrichtungen notwendig sind. Der Versorgungskanal kann auch über eine Zusatzleitung mit einem Verdichter verbunden sein, durch den Luft in den Versorgungskanal eingeleitet wird. In Abhängigkeit von der Fahrzeuggeschwindigkeit kann dann der Volumenstrom der vom Verdichter in den Versorgungskanal zugeführten Luft verringert werden. Der Vorteil dieser Oxidantzufühnung kann darin gesehen werden, daß der Wirkungsgrad erhöht werden kann, da der Energieverbrauch für Nebenaggregate, wie z. B. einen Verdichter, verringert wird. Eine unmittlbare Zuführung der Luft zu der Sauerstoffseite des Brennstoffzellen-Moduls unterstützt auch eine Kühlung des Brennstoffzellen-Moduls. Die vorstehend genannte Möglichkeit der Zuführung von Luft zu einem Brennstoffzellen-Modul kann auch bei Brennstoffzellen-Modulen verwirklicht werden, die nicht den erfindungsgemäßen Aufbau haben. Dies gilt auch für die Zufuhrung des Brennstoffes, insbesondere des Wasserstoffes.

Der Brennstoffversorgungskanal kann in Form einer geschlossenen Kammer ausgebildet sein. Die Kammer wird kontinuierlich mit dem Brennstoff versorgt. Die Menge des Brennstoffes beziehungsweise das Brennstoffvolumen, welches zugeführt wird, ist abhängig vom Druck im Brennstoffversorgungskanal. Über den Druck im Brennsroffversorgungskanal kann eine Steuerung der Leistungsdichte des Brennstoffzellen-Moduls erreicht werden.

Ist der Versorgungskanal in Form einer Kammer ausgebildet, so besteht die Gefahr, daß durch Verunreinigungen im Brennstoff insbesondere im Wasserstoff, die Konzentration der Verunreinigungen im Brennstoffversorgungskanal zunimmt, durch die eine Funktionsbeeinträchtigung der Brennstoffzelle eintreten kann. Zur Vermeidung einer solchen Beeinträchtigung wird vorgeschlagen, daß die Kammer innerhalb bestimmter Intervalle, die von der abgegebenen Leistung der Brennstoffzelle abhängen können, gespült wird.

Während des Spülvorgangs wird vorzugsweise der sich im Kanal befindende Brennstoff über einen Katalysator umgewandelt, bevor der Brennstoff an die Umgebungsluft abgegeben wird.

Nach einer weiteren vorteilhaften Ausgestaltung des Brennstoffzellen-Moduls wird vorgeschlagen, daß die wenigstens zwei Brennstoffzellen einen gemeinsamen Elektrolyten aufweisen. Diese Ausgestaltung des Brennstoffzellen-Moduls hat den Vorteil, daß die Herstellung des Moduls vereinfacht wird. Vorzugsweise weisen zwei benachbarte Brennstoffzellen eines jeden Stranges weisen einen gemeinsamen Elektrolyten auf. Hierdurch ist ein Ersatz beziehungsweise Austausch eines schadhaften Stranges aus dem Brennstoffzellen-Modul relativ einfach. Dies erhöht die Wartungsfreundlichkeit des Brennstoffzellen-Moduls.

Nach einer weiteren vorteilhaften Ausgestaltung des Brennstoffzellen-Moduls wird vorgeschlagen, daß jeder Strang ein im wesentlichen mäanderförmig ausgebildetes Oberteil und ein im wesentlichen mäanderförmig ausgebildetes Unterteil aufweist. Zwischen dem Oberteil und dem Unterteil ist ein Elektrolyt angeordnet. Das Oberteil und das Unterteil weisen im wesentlichen U-förmig ausgebildete Aufnahmen auf. Die Aufnahmen des Oberteils sind zu einer-gemeinsamen Seite hin offen. Auch die Aufnahmen des Unterteils sind zu einer gemeinsamen Seite hin offen, wobei die Aufnahmen des Unterteils zur gegenüberliegenden Seite hin offen sind. Die Öffnungen der Aufnahmen sind vorzugsweise zum Brennstoffversorgungskanal beziehungsweise zum Oxidantversorgungskanal hin offen.

Nach einer weiteren vorteilhaften Ausgestaltung weist das Oberteil und das Unterteil jeweils im wesentlichen quer zur Längsrichtung des Oberteils beziehungsweise des Unterteils verlaufende Wände auf, die von einer "Stirnseite her Aussparungen aufweisen, in die elektrisch leitende Verbindungselemente angeordnet sind. Vorzugsweise ist die Aussparung und wenigstens der in der Aussparung liegende Abschnitt des Verbindungselementes so ausgebildet, daß der Abschnitt mit der Stirnseite fluchtet. Das Verbindungselement verbindet Elektroden benachbarter Brennstoffzellen, die unterschiedliche Polarität aufweisen.

Nach einer noch weiteren vorteilhaften Ausgestaltung des Brennstoffzellen-Moduls wird vorgeschlagen, daß eine gasdichte Verbindung zwischen dem Verbindungselement und der Wand ausgebildet ist. Das Oberteil und/oder das Unterteil bestehen vorzugsweise aus einem Kunststoff. Das Oberteil beziehungsweise das Unterteil kann auch eine Deckwand aufweisen, welche gleichzeitig eine elektrische Isolierung zu einem benachbarten Strang des Brennstoffzellen-Moduls bildet. In der Deckwand können auch die Verbindungselemente angeordnet sein, so daß auf Aussparungen in den Wänden des Oberteils beziehungsweise Unterteils verzichtet werden kann.

Weitere Einzelheiten und Vorteile des erfindungsgemäßen Brennstoffzellen-Moduls werden anhand der in der Zeichnung dargestellten Ausführungsbeispiele-erläutert. Es zeigen:
- Fig. 1: ein erstes Ausführungsbeispiel eines Brennstoffzellen-Moduls in einer Draufsicht,
- Fig. 2: das Brennstoffzellen-Modul nach Fig. 1 in einer Seitenansicht,
- Fig. 3: schematisch in einer Draufsicht ein Oberteil des Brennstoffzellen-Moduls nach Fig. 1,
- Fig. 4: schematisch in einer Draufsicht ein Unterteil des Brennstoffzellen-Moduls,
- Fig. 5: schematisch in einer Draufsicht ein zweites Ausführungsbeispiel eines Brennstoffzellen-Moduls und
- Fig. 6: das Brennstoffzellen-Modul nach Fig. 5 in einer Schnittansicht.

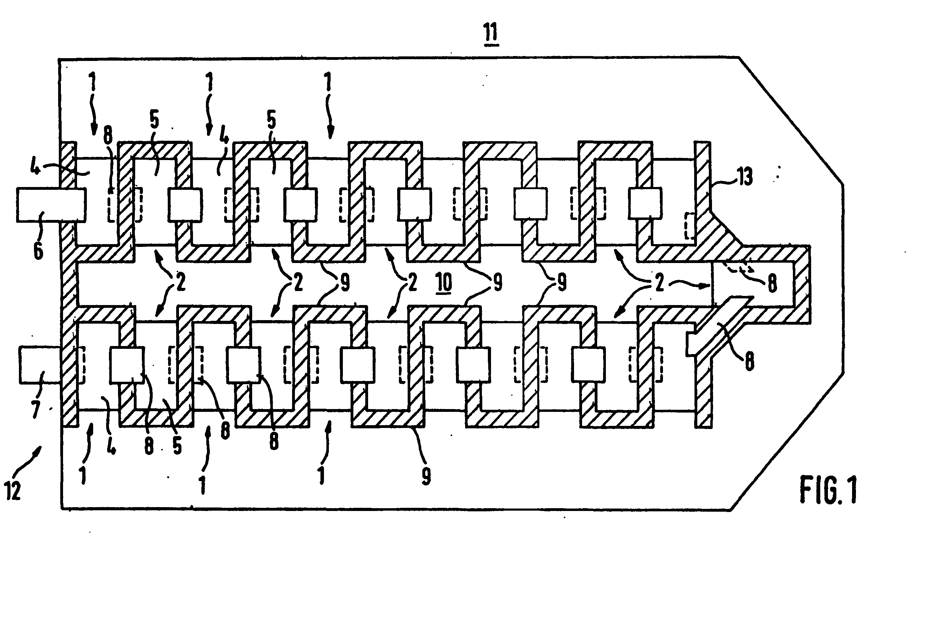

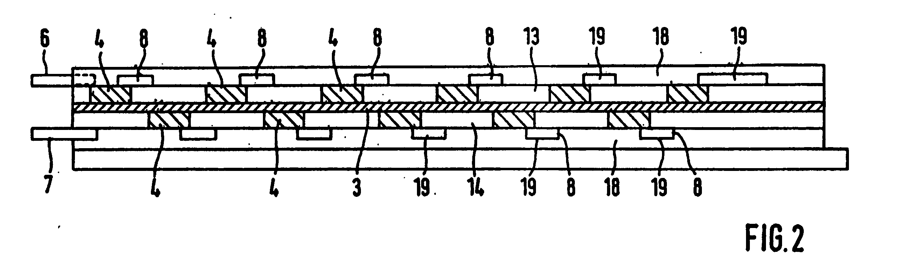

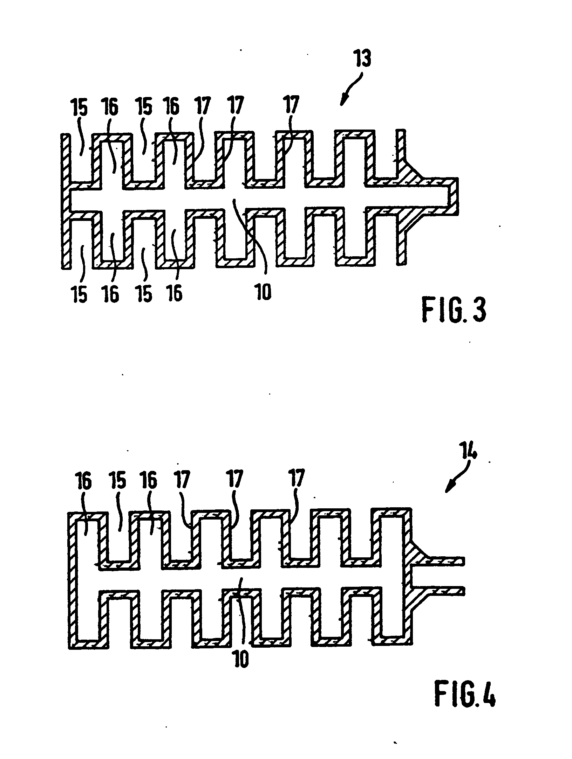

Fig. 1 zeigt ein erstes Ausführungsbeispiel eines Brennstoffzellen-Moduls. Das Brennstoffzellen-Modul weist Brennstoffzellen 1, 2 auf. Jede Brennstoffzelle 1, 2 weist zwei Elektroden, eine Kathode 4 und eine Anode 5 auf. Zwischen der Kathode 4 und der Anode 5 einer jeden Brennstoffzelle 1, 2 ist ein Elektrolyt 3 angeordnet, wie die Fig. 2 zeigt.

Das Brennstoffzellen-Modul weist einen Brennstoffversorgungskanal 10 auf. Der Brennstoffversorgungskanal 10 ist in dem dargestellten Ausfübzungsbeispiel nach Fig. 1 zentral innerhalb des Brennstoffzellen-Moduls ausgebildet. Ein Oxidantversorgungskanal 11 ist zur Versorgung der Brennstoffzellen 1, 2 vorgesehen.

Die Brennstoffzellen 1, 2 sind im wesentlichen nebeneinander angeordnet, wie dies aus der Fig. 1 ersichtlich ist. Die Brennstoffzellen 1, 2 sind im wesentlichen unmittelbar nebeneinander angeordnet und bilden einen Strang 12. Die einzelnen Brennstoffzellen 1, 2 des Strangs 12 sind in Serie geschaltet. Zur elektrischen Verbindung des Brennstoffzellen-Moduls sind Anschlüsse 6, 7 vorgesehen.

Die einzelnen Brennstoffzellen 1, 2 sind über Vabindungselemente 8 miteinander verbunden. Ausgehend vom Anschluß 7 verbindet das verbindungselement 8 die Kathode 4 der Brennstoffzelle 1 mit der Anode 5 der Brennstoffzelle 2. Ein weiteres Verbindungselement 8 verbindet die Kathode 4 der Brennstoffzelle 2 mit der Anode der benachbarten Brennstoffzelle 1 und so weiter bis zum Anschluß 6. Die Brennstoffzellen 1, 2 sind so angeordnet, daß auf eine Kathode 4, in der Draufsicht in der Fig. 1, eine Anode 5 der folgenden Brennstoffzelle 2 folgt.

Die Brennstoffzellen 1, 2 weisen einen gemeinsamen Elektrolyten 3 auf, wie dies aus der Fig. 2 ersichtlich ist. Auf dem Elektrolyt 3 ist ein Oberteil 13 angeordnet. Unterhalb des Elektrolyten 3 ist ein Unterteil 14 angeordnet.

Das Oberteil 13 ist schematisch in der Fig. 3 dargestellt. Das Oberteil 13 ist im wesentlichen mäanderförmig ausgebildet. Es weist U-förmige Aufnahmen 15, 16 auf. Die Aufnahmen 15, 16 sind durch Wände 17 voneinander getrennt. In die Aufnahmen 15 beziehungsweise 16 sind die Kathoden 4 beziehungsweise Anoden 5 eingebracht, wie dies aus der Fig. 1 ersichtlich ist. Das Oberteil 13 begrenzt durch die Wände 9 den zentral ausgebildeten Brennstoffversorgungskanal 10. Die Aufnahmen 16 sind zum Brennstoffversorgungskanal 10 hin offen. Die Aufnahmen 15 sind zu einem nicht dargestellten Oxidantversorgungskanal 11 hin offen.

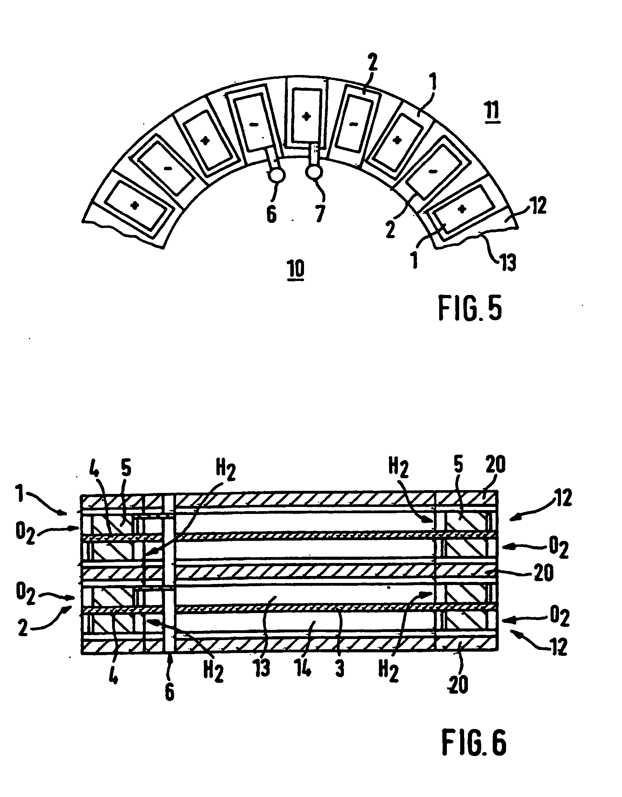

Fig. 4 zeigt ein Unterteil 14 auf Das Unterteil 14 ist im wesentlichen entsprechend dem Oberteil 13 ausgebildet. Bei einer Anordnung des Oberteils 13 auf dem Unterteil 14 liegen die Wände 17 übereinander. Auch das Unterteil 14 weist einen zentral ausgebildeten Brennstoffversorgungskanal 10 auf. Das Unterteil 14 weist Aufnahmen 15 auf. Die Aufnahmen 15 sind zu einem nicht dargestellten Oxidantversorgungskanal 11 hin offen.

Das Unterteil 14 weist Aufnahmen 16 auf, die zum Brennstoffversorgungskanal 10 hin offen sind. Das Unterteil 14 und das Oberteil 13 sind so ausgebildet, daß bei einer Anordnung des Oberteils 13 über dem Unterteil 14 unter der zum Oxidantversorgungskanal hin offenen Aufnahme 15 des Oberteils 13 eine zum Brennstoffversorgungskanal 10 hin offene Aufnahme 16 liegt. Die zum Brennstoffversorgungskanal 10 hin offene Aufnahme 16 des Oberteils liegt über einer zum Oxidantversorgungskanal hin offenen Aufnahme 15 des Unterteils 14.

Auf dem Oberteil 13 beziehungsweise Unterteil 14 ist eine Abdeckung 18 vorgesehen, die so ausgebildet ist, daß sie den zentral ausgebildeten Brennstoffversorgungskanal 10 freigibt, wenn mehrere Stränge übereinander angeordnet sind. In der Abdeckung 18 sind Aussparungen 19 ausgebildet, in denen jeweils ein Verbindungselement 8 angeordnet ist. Ein jedes Verbindungselement 8 verbindet eine Kathode der einen Brennstoffzelle mit der Anode der anderen, benachbarten, Brennstoffzelle. Aus der Fig. 2 ist ersichtlich, daß die Kathoden 4 frei zugänglich sind, so daß über Diffusionsvorgänge ein Oxidant, insbesondere Luft, durch die porös ausgebildete Kathode zum Elektrolyten gelangen kann. Entsprechend besteht die Möglichkeit, für einen Brennstoff, insbesondere Wasserstoff, zu der Anode 5 zu gelangen. Auch die Anode 5 ist porös ausgebildet. Vorzugsweise handelt es sich bei der Anode 5 um einen Graphitkörper. An der Anode 5 kann weiteres katalytisches Material vorgesehen sein, bei dem es sich beispielsweise um Platin handelt.

In den Fig. 5 und 6 ist ein zweites Ausführungsbeispiel eines Brennstoffzellen-Moduls dargestellt. Das Brennstoffzellen-Modul weist mehrere nebeneinander angeordnete Brennstoffzellen 1, 2 auf Die Brennstoffzellen 1, 2 sind so angeordnet, daß der Elektrolyt der Brennstoffzellen im wesentlichen in einer gemeinsamen Ebene liegt. Die Brennstoffzellen sind im wesentlichen auf einem Kreisumfang angeordnet. Die auf dem Kreisumfang angeordneten Brennstoffzellen 1, 2 bilden einen Strang 12. Der Strang 12 weist Anschlüsse 6, 7 auf, durch die mehrere übereinander angeordnete Stränge 12 parallel zueinander geschaltet werden können. Die Brennstoffzellen 1, 2 sind in Serie angeordnet. Die Brennstoffzellen 1, 2 des Strangs 12 sind in einem Oberteil 13 und einem Unterteil 14, welches nicht dargestellt ist, angeordnet. Der prinzipielle Aufbau des Oberteils und des Unterteils entspricht dem Aufbau des Oberteils 13 beziehungsweise Unterteils 14 in den Fig. 3 und 4. Auch hier sind Aufnahmen vorgesehen, die auf dem Kreisumfang angeordnet sind.

Die übereinander angeordneten Stränge 12 bilden ein hohlzylinderförmiges Brennstoffzellen-Modul. Wie aus der Fig. 6 ersichtlich ist, ist zwischen zwei benachbarten Strängen 12 eine Kühleinheit 20, durch die Wärme aus der Brennstoffzelle abgeleitet wird, angeordnet. Die Kühleinheit ist vorzugsweise so ausgebildet, daß diese zugleich eine Befeuchtung des Elektrolyten ermöglicht. Dies ist insbesondere vorteilhaft, wenn es sich bei dem Elektrolyten um eine protonenleitende Elektrolytmembran handelt. Die Befeuchtung erfolgt durch Zufuhrung von Wasser zu der protonenleitenden Elektrolytmembran, wobei die Kühleinheit Kanäle aufweist, die mindestens teilweise durch eine semipermable Membran begrenzt sind, durch die ein Wasserdurchtritt möglich ist. Die Bezeichnung Unterteil und Oberteil beschreiben eine bevorzugte Anordnung der Brennstoffzellen. Die Brennstoffzellen beziehungsweise wenigstens ein Strang können auch vertikal oder geneigt bezüglich einer Vertikalen angeordnet sein.

### Bezugszeichenliste

- 1, 2: Brennstoffzelle
- 3: Elektrolyt
- 4: Kathode
- 5: Anode
- 6,7: Anschlüsse
- 8: Verbindungselement
- 9: Wand
- 10: Brennstoffversorgungskanal
- 11: Oxidantversorgungskanal
- 12: Strang
- 13: Oberteil
- 14: Unterteil
- 15, 16: Aufnahme
- 17: Wand
- 18: Abdeckung
- 19: Aussparung
- 20: Kühleinheit

## Patentansprüche

1. Brennstoffzellen-Modul mit wenigstens zwei Brennstoffzellen (1, 2), insbesondere Niedertemperatur-Brennstoffzellen, wobei jede Brennstoffzelle (1,2) zwei Elektroden (4, 5) verschiedener Polarität sowie einen zwischen den Elektroden (4, 5) angeordneten Elektrolyten (3) aufweist, mit wenigstens einem Brennstoffversorgungskanal (10) und mit wenigstens einem Oxidantversorgungskanal (11), die strömungstechnisch mit den Brennstoffzellen (1, 2) verbunden sind, **dadurch gekennzeichnet, daß** die wenigstens zwei Brennstoffzellen (1, 2) im wesentlichen nebeneinander und die Elektrolyte (3) einer jeden Zelle (1, 2) im wesentlichen in einer gemeinsamen Ebene angeordnet sind, und die Elektroden (4, 5) verschiedener Polarität elektrisch miteinander verbunden sind, wobei die Brennstoffzellen (1, 2) so abwechselnd angeordnet sind, daß die Elektroden (4, 5) verschiedener Polarität benachbarter Brennstoffzellen (1 2) in einer Ebene liegen.

2. Brennstoffzellen-Modul nach Anspruch 1, **dadurch gekennzeichnet, daß** die wenigstens zwei Brennstoffzellen (1, 2) im wesentlichen nebeneinander, vorzugsweise unmittelbar nebeneinander, angeordnet sind und einen Strang (12) bilden.

3. Brennstoffzellen-Modul nach Anspruch 2, **gekennzeichnet durch** wenigstens zwei, vorzugweise parallel geschaltete, Stränge (12).

4. Brennstoffzellen-Modul nach Anspruch 3, **dadurch gekennzeichnet, daß** wenigstens zwei Stränge (1, 2) voneinander elektrisch isoliert übereinander angeordnet sind.

5. Brennstoffzellen-Modul nach einem der Ansprüche 1 bis 4, **dadurch gekennzeichnet, daß** die Brennstoffzellen (1, 2) im wesentlichen parallel zueinander angeordnet sind

6. Brennstoffzellen-Modul nach einem der Ansprüche 1 bis 4, **dadurch gekennzeichnet, daß** die Brennstoffzellen (1, 2) im wesentlichen auf einem Kreisumfang angeordnet sind.

7. Brennstoffzellen-Modul nach einem der Ansprüche 1 bis 6, **dadurch gekennzeichnet, daß** die Brennstoffzellen (1, 2) zwischen dem wenigstens einen Brennstoffversorgungskanal (10) und dem wenigstens einen Oxidantversorgungskanal (11) angeordnet sind.

8. Brennstoffzellen-Modul nach einem der Ansprüche 1 bis 7, **dadurch gekennzeichnet, daß** jede der Brennstoffzellen (1, 2) einen Brennstoffzuführkanal und einen Oxidantzuführkanal aufweist, wobei die Brennstoffzuführkanäle der Brennstoffzellen (1, 2) mit dem Brennstoffversorgungskanal (10) und die Oxidantzuführkanäle der Brennstoffzellen (1, 2) mit dem Oxidantversorgungskanal (11) verbunden sind, wobei die Brennstoffzellen (1, 2) zwischen dem Brennstoffversorgungskanal (10) und dem Oxidantversorgungskanal (11) angeordnet sind.

9. Brennstoffzellen-Modul nach Anspruch 7 oder 8, **dadurch gekennzeichnet, daß** jeder Strang (12) jeweils einen Brennstoffversorgungskanal (10) und einen Oxidantversorgungskanal (11) aufweist.

10. Brennstoffzellen-Modul nach Anspruch 8 oder 9, **dadurch gekennzeichnet, daß** die Breennstoffzuführkanäle im wesentlichen senkrecht zum Brennstoffversorgungskanal (10) ausgebildet sind.

11. Brennstoffzellen-Modul nach Anspruch 8, 9 oder 10, **dadurch gekennzeichnet, daß** die Oxidantzuführkanäle im wesentlichen senkrecht zum Oxidantversorgungskanal (11) ausgebildet sind.

12. Brennstoffzellen-Modul nach einem der Ansprüche 1 bis 11, **dadurch gekennzeichnet, daß** die wenigstens zwei Brennstoffzellen (1, 2) einen gemeinsamen Elektrolyten (3) aufweisen.

13. Brennstoffzellen-Modu nach einem der Ansprüche 2 bis 11, **dadurch gekennzeichnet, daß** wenigstens zwei benachbarte Brennstoffzellen (1, 2) eines jeden Stranges (12) einen gemeinsamen Elektrolyten (3) aufweisen.

14. Brennstoffzellen-Modul nach Anspruch 12 oder 13, **dadurch gekennzeichnet, daß** jeder Strang (12) ein im wesentlichen mäanderförmig ausgebildetes Oberteil (13) und Unterteil (14) aufweist, zwischen denen der Elektrolyt (3) angeordnet ist, wobei das Oberteil (13) und das Unterteil (14) im wesentlichen U-förmig ausgebildete Aufnahmen (15, 16) aufweist und die Aufnahmen (15, 16) des Oberteils (13) zu einer gemeinsamen Seite hin und die Aufnahmen (16, 15) des Unterteils (14) zu einer gemeinsamen, gegenüberliegenden Seite hin offen sind.

15. Brennstoffzellen-Modul nach Anspruch 14, **dadurch gekennzeichnet, daß** das Oberteil (13) und das Unterteil (14) jeweils im wesentlichen quer zur Längsrichtung des Oberteils (13) beziehungsweise des Unterteils (14) verlaufende Wände (17) aufweist, die von einer Stirnseite her Aussparungen aufweisen, in die elektrisch leitende Verbindungselemente (8) angeordnet sind.

16. Brennstoffzellen-Modul nach Anspruch 15, **dadurch gekennzeichnet, daß** die Aussparungen und wenigstens der in der Aussparung liegende Abschnitt des Verbindungselementes (8) so ausgebildet sind, daß der Abschnitt mit der Stirnseite fluchtet.

17. Brennstoffzellen-Modul nach Anspruch 15 oder 16, **dadurch gekennzeichnet, daß** eine gasdichte Verbindung zwischen dem Verbindungselement (8) und der Wand (17) ausgebildet ist.

18. Brennstoffzellen-Modul nach einem der Ansprüche 14 bis 17, **dadurch gekennzeichnet, daß** das Oberteil (13) und/oder das Unterteil (14) aus einem Kunststoff gebildet ist.

19. Brennstoffzellen-Modul nach einem der Ansprüche 14 bis 18, **dadurch gekennzeichnet, daß** wenigstens eine Abdeckung (18) vorgesehen ist, die auf dem Oberteil (13) oder dem Unterteil (14) angeordnet ist, wobei die Abdeckung (18) Verbindungselemente (8) aufweist, durch die benachbarte Brennstoffzellen (1, 2) elektrisch miteinander verbunden werden.

## Claims

1. A fuel cell module with at least two fuel cells (1, 2), in particular low temperature fuel cells, wherein in each fuel cell (1, 2) comprises two electrodes (4, 5) of different polarity and an electrolyte (3) disposed between said electrodes (4, 5) with at least one fuel supply channel (10) and with at least one oxidant supply channel fluidically communicating with said fuel cells (1, 2) **characterized in that** the at least two fuel cells (1, 2) are disposed substantially alongside one another and said electrolyte (3) of each of said fuel cells are disposed substantially in a common plane and wherein said electrodes (4, 5) of different polarity are electrically connected to one another, wherein said fuel cells (1, 2) are disposed alternately such that said electrodes (4, 5) of different polarities of adjacent fuel cells (1, 2) lie in a plane.

2. Fuel cell module according to claim 1, **characterized in that** the at least two fuel cells (1, 2) are disposed substantially alongside one another, in particular directly one another, and form a row (12).

3. Fuel cell module according to claim 2, **characterized by** at least two rows (12), in particular being connected parallely.

4. Fuel cell module according to claim 3, **characterized in that** at least two rows (1, 2) are disposed above another and are electrically insulated from one another.

5. Fuel cell module according to one of claims 1 to 4, **characterized in that** the fuel cells (1, 2) are disposed substantially parallel to one another.

6. Fuel cell module according to one of claims 1 to 4, **characterized in that** the fuel cells (1, 2) are disposed substantially on a circumference of a circle.

7. Fuel cell module according to one of claims 1 to 6, **characterized in that** the fuel cells (1, 2) are disposed between the at least one fuel supply channel (10) and the at least one oxidant supply channel (11).

8. Fuel cell module according to one of claims 1 to 7, **characterized in that** each of the fuel cells (1, 2) comprises a fuel feed channel and an oxidant feed channel, wherein the fuel feed channels of said fuel cells (1, 2) are connected with the fuel supply channel (10) and the oxidant feed channels of said fuel cells (1, 2) are connected to the oxidant supply channel (11), wherein said fuel cells (1, 2) are disposed between the fuel supply channel (10) and the oxidant supply channel (11).

9. Fuel cell module according to claim 7 or 8, **characterized in that** each row (12) comprises a fuel supply channel (10) and an oxidant supply channel (11).

10. Fuel cell module according to claim 8 or 9, **characterized in that** the fuel feed channels are disposed substantially parallel to the fuel supply channel (10).

11. Fuel cell module according to claim 8, 9, or 10, **characterized in that** the oxidant feed channels are disposed substantially parallel to the oxidant supply channel (11).

12. Fuel cell module according to one of claims 1 to 11, **characterized in that** the at least two fuel cells (1, 2) comprise a common electrolyte (3).

13. Fuel cell module according to one of claims 2 to 11, **characterized in that** at least two adjacent fuel cells (1, 2) of each row (12) comprise a common electrolyte (3).

14. Fuel cell module according to claim 12 or 13, **characterized in that** each row (12) comprises a meandering upper part (13) and lower part (14) between which said electrolyte (3) is disposed, wherein the upper part (13) and the lower part (14) comprises substantially U-shaped holders (15, 16) and wherein said holders (15, 16) of said upper part (13) are open toward a common side and said holders (15, 16) of said lower part (14) are open to a common opposite side.

15. Fuel cell module according to claim 14, **characterized in that** the upper part (13) and the lower part (14) each comprise walls (17) which run substantially transversely with respect to a longitudinal direction of the upper part (13) and said lower part (14), respectively, said walls having cut-outs from an end face in which electrically conductive connecting elements (8) are disposed.

16. Fuel cell module according to claim 15, **characterized in that** said cut-outs and at least the section of the connecting element (8) which is located in said cut-out are formed such that the section is aligned with said end face.

17. Fuel cell module according to claim 15 or 16, **characterized in that** a gas tight connection is formed between the connecting element (8) and the wall (17).

18. Fuel cell module according to one of claims 14 to 17, **characterized in that** the upper part (13) and/or the lower part (14) are formed from a plastic.

19. Fuel cell module according to one of claims 14 to 18, **characterized in that** at least a cover (18) is disposed on said upper part (13) or said lower part (14) wherein the cover (18) comprises connecting elements (8) by which the adjacent fuel cells (1, 2) are electrically connected to each other.

## Revendications

1. Module de cellules à combustible avec au moins deux cellules à combustible (1, 2), notamment des cellules à combustible à température basse, dans quel cas chaque cellule à combustible (1, 2) a deux électrodes (4, 5) de polarité différente ainsi qu'un électrolyte (3) agencé entre les électrodes (4,5), avec au moins un canal d'alimentation en combustible (10) et avec au moins un canal d'alimentation en agent oxydant (11) qui sont reliés par connexion de flux aux cellules à combustible (1, 2), **caractérisé en ce que** les au moins deux cellules à combustible (1, 2) sont agencées sensiblement l'une à coté de l'autre et les électrolytes (3) de chaque cellule (1, 2) sont agencés sensiblement dans un plan commun, et les électrodes (4, 5) de polarité différente sont reliées électriquement l'une à l'autre, les cellules à combustible (1, 2) étant agencées en alternance de manière telle que les électrodes (4, 5) de polarité différente de cellules à combustible (1, 2) adjacentes se trouvent dans un plan.

2. Module de cellules à combustible selon la revendication 1, **caractérisé en ce que** les au moins deux cellules à combustible (1, 2) sont agencées sensiblement l'une à coté de l'autre, de préférence directement l'une à coté de l'autre et forment une rangée (12).

3. Module de cellules à combustible selon la revendication 2, **caractérisé par** au moins deux rangées (12) connectées de préférence en parallèle.

4. Module de cellules à combustible selon la revendication 3, **caractérisé en ce qu'**au moins deux rangées (1, 2) sont agencées l'une au dessus de l'autre de manière à être isolées électriquement.

5. Module de cellules à combustible selon l'une des revendications 1 à 4, **caractérisé en ce que** les cellules à combustible (1, 2) sont agencées sensiblement de manière parallèle l'une à l'autre.

6. Module de cellules à combustible selon l'une des revendications 1 à 4, **caractérisé en ce que** les cellules à combustible (1, 2) sont agencées sensiblement sur la circonférence d'un cercle.

7. Module de cellules à combustible selon l'une des revendications 1 à 6, **caractérisé en ce que** les cellules à combustible (1, 2) sont agencées entre l'au moins un canal d'alimentation en combustible (10) et l'au moins un canal d'alimentation en agent oxydant (11).

8. Module de cellules à combustible selon l'une des revendications 1 à 7, **caractérisé en ce que** chaque cellule à combustible (1, 2) a un canal d'amenée de combustible et un canal d'amenée d'agent oxydant, les canaux d'amenée de combustible des cellules à combustible (1, 2) sont reliés au canal d'alimentation en combustible (10) et les canaux d'amenée d'agent oxydant des cellules à combustible (1, 2) sont reliés au canal d'alimentation en agent oxydant (11), les cellules à combustible (1, 2) étant agencées entre le canal d'alimentation en combustible (10) et le canal d'alimentation en agent oxydant (11).

9. Module de cellules à combustible selon la revendication 7 ou 8, **caractérisé en ce que** chaque rangée (12) présente respectivement un canal d'alimentation en combustible (10) et un canal d'alimentation en agent oxydant (11).

10. Module de cellules à combustible selon la revendication 8 ou 9, **caractérisé en ce que** les canaux d'amenée de combustible sont réalisés sensiblement de manière perpendiculaire par rapport au canal d'alimentation en combustible (10).

11. Module de cellules à combustible selon la revendication 8, 9 ou 10, **caractérisé en ce que** les canaux d'amenée d'agent oxydant sont réalisés sensiblement de façon perpendiculaire par rapport au canal d'alimentation en agent oxydant (10).

12. Module de cellules à combustible selon l'une des revendications 1 à 11, **caractérisé en ce que** les au moins deux cellules à combustible (1, 2) ont un électrolyte (3) commun.

13. Module de cellules à combustible selon l'une des revendications 2 à 11, **caractérisé en ce qu'**au moins deux cellules à combustible (1, 2) adjacentes de chaque rangée (12) ont un électrolyte commun (3).

14. Module de cellules à combustible selon la revendication 12 ou 13, **caractérisé en ce que** chaque rangée (12) a une partie supérieure (13) et une partie inférieure (14) réalisées sensiblement en forme de méandres, entre lesquelles l'électrolyte (3) est agencé, dans quel cas la partie supérieure (13) et la partie inférieure (14) présentent des logements (15, 16) réalisés sensiblement en forme de U et les logements (15, 16) de la partie supérieure (13) sont ouverts vers un coté commun et les logements (16, 15) de la partie inférieure (14) sont ouverts vers un coté commun situé en vis-à-vis.

15. Module de cellules à combustible selon la revendication 14, **caractérisé en ce que** la partie supérieure (13) et la partie inférieure (14) ont chacune des parois (17) qui s'étendent sensiblement de manière transversale à la direction longitudinale de la partie supérieure (13), respectivement de la partie inférieure (14), lesquelles parois ont des évidements à partir d'une face frontale dans lesquels des éléments de jonction électroconducteurs (8) sont agencés.

16. Module de cellules à combustible selon la revendication15, **caractérisé en ce que** les évidements et au moins la section de l'élément de jonction (8) qui se trouve dans l'évidement sont formés de manière telle que la section est alignée avec la face frontale.

17. Module de cellules à combustible selon la revendication 15 ou 16, **caractérisé en ce qu'**une liaison étanche au gaz est réalisée entre l'élément de jonction (8) et la paroi.

18. Module de cellules à combustible selon l'une des revendications 14 à 17, **caractérisé en ce que** la partie supérieure (13) et/ou la partie inférieure (14) sont réalisées d'une matière plastique.

19. Module de cellules à combustible selon l'une des revendications 14 à 18, **caractérisé en ce qu'**au moins une couverture (18) est prévue, qui est agencée sur la partie supérieure (13) ou sur la partie inférieure (14), la couverture (18) présentant des éléments de jonction (8) au moyen desquels des cellules à combustible adjacentes (1, 2) sont reliées électriquement les unes aux autres.
